(19) Europäisches Patentamt
European Patent Office
Office européen des brevets

(11) **EP 2 783 461 B1**

(12) **FASCICULE DE BREVET EUROPEEN**

(45) Date de publication et mention
de la délivrance du brevet:
**03.10.2018 Bulletin 2018/40**

(51) Int Cl.:
**B60L 15/20** *(2006.01)*    **H02P 21/22** *(2016.01)*
**H02P 21/05** *(2006.01)*    **H02P 21/06** *(2016.01)*

(21) Numéro de dépôt: **12788532.5**

(22) Date de dépôt: **20.11.2012**

(86) Numéro de dépôt international:
**PCT/EP2012/073126**

(87) Numéro de publication internationale:
**WO 2013/076091 (30.05.2013 Gazette 2013/22)**

(54) **PROCEDE DE COMMANDE D'UN GROUPE MOTOPROPULSEUR ET SYSTEME DE COMMANDE CORRESPONDANT**

VERFAHREN ZUR STEUERUNG EINES ANTRIEBSSTRANGES UND ENTSPRECHENDES STEUERSYSTEM

METHOD FOR CONTROLLING A POWER TRAIN AND CORRESPONDING CONTROL SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.11.2011 FR 1160647**

(43) Date de publication de la demande:
**01.10.2014 Bulletin 2014/40**

(73) Titulaire: **Renault s.a.s.
92100 Boulogne-Billancourt (FR)**

(72) Inventeurs:
• **MERIENNE, Ludovic
F-91140 Villejust (FR)**
• **MALOUM, Abdelmalek
F-94550 Chevilly La Rue (FR)**

(56) Documents cités:
**JP-A- 9 131 100    US-A1- 2002 175 649**

EP 2 783 461 B1

# EP 2 783 461 B1

**Description**

L'invention a pour domaine technique la commande des moteurs électriques, et en particulier la commande des moteurs électriques de type synchrone à rotor bobiné.

Un moteur électrique de type synchrone à rotor bobiné comprend une partie fixe appelée stator et une partie mobile appelée rotor. Le stator comprend trois bobines décalées de 120° et alimentées en courant alternatif. Le rotor comprend une bobine alimentée en courant continu. Les courants de phase du stator dépendent des résistances et inductances du rotor et du stator ainsi que de l'inductance mutuelle entre le rotor et le stator.

La commande d'un tel système utilise généralement des correcteurs de type PI acronyme pour Proportionnel Intégral. Un exemple d'utilisation de ce type de correcteur est fourni dans le document EP1 341 293.

Cela étant, ce type de correcteur peut présenter des problèmes d'instabilité notamment lorsqu'on veut avoir un système rapide. Pour éviter les problèmes d'instabilité, il est connu selon l'état de la technique de calculer les paramètres de ces correcteurs de manière à assurer des marges de stabilité. Pour obtenir un système plus robuste, il est connu d'augmenter ces marges de stabilité et donc de diminuer les performances du correcteur.

Il est également connu dans l'état de la technique d'utiliser des correcteurs autres que les correcteurs Proportionnel Intégral. Un exemple de correcteur n'utilisant pas de correcteur Proportionnel Intégral est décrit dans le document US5,015,937 qui décrit la commande d'une machine synchrone à rotor bobiné en boucle ouverte avec des tables de données. Un autre exemple de correcteur n'utilisant pas de correcteur Proportionnel Intégral est décrit dans le document EP0 702 451 qui décrit le contrôle en vitesse d'une machine synchrone à aimant permanent en réponse à des variations de charge du moteur.

Les documents US2002/175649 et JP9131100 font aussi partie de l'art antérieur de la présenté demande. Cela étant, ces systèmes ne sont pas adaptés au domaine automobile dans lequel la vitesse du moteur est variable et peut être considérée comme une perturbation.

Un but de la présente invention est d'améliorer la stabilité de la régulation d'un moteur électrique de type synchrone à rotor bobiné sans réduire les performances du correcteur.

Un autre but est une régulation qui supporte les variations de vitesse et maintient les courants à leur consigne, ce qui permet d'avoir un contrôle du couple fourni par la machine même à vitesse variable.

Il est proposé donc un contrôleur et un procédé de contrôle pour commander un groupe motopropulseur qui n'utilise pas de contrôleur Proportionnel Intégral.

L'invention a ainsi pour objet un procédé de commande d'un groupe motopropulseur équipant un véhicule automobile et comprenant un moteur électrique muni d'un rotor et d'un stator, comprenant une régulation des courants du rotor et du stator pour qu'ils atteignent des valeurs de courants de consigne grâce à des signaux de commande du moteur électrique, lesdits courants à réguler et lesdits signaux de commande étant exprimés dans un repère tournant et comprenant une pluralité d'axes, lesdits signaux de commande étant issus d'une transformation comprenant un changement de variable permettant le découplage dynamique de la régulation suivant chacun des axes de ladite pluralité d'axes.

Selon une caractéristique générale, la régulation comprend pour chacun des axes de ladite pluralité d'axes une application sur le courant à réguler de cet axe de deux opérateurs linéaires différents en fonction de la valeur du courant à réguler de cet axe par rapport à sa consigne, le résultat de l'application des deux opérateurs linéaires devant être sensiblement égal au signal de commande de cet axe.

Ainsi, dans tous les cas, on assure que la dérivée du courant a le bon signe par rapport à la consigne. On obtient des courants se dirigeant toujours vers leurs consignes.

Selon une caractéristique, pour chacun des axes, les deux opérateurs linéaires comprennent un ajout d'une variable d'addition, ladite variable d'addition étant différente en fonction des deux opérateurs linéaires, une variable d'addition supérieure étant utilisée par l'opérateur linéaire appliqué lorsque le courant de l'axe en cours est inférieur à sa consigne et une variable d'addition inférieure étant utilisée par l'opérateur linéaire appliqué lorsque le courant de l'axe en cours est supérieur à sa consigne.

La régulation ne nécessite donc pas d'opérateur compliqué, la différence entre les deux opérateurs est généralement uniquement due à la variable d'addition.

Selon une autre caractéristique, pour chacun des axes, les deux opérateurs correspondent à une équation de régulation du courant de l'axe en cours et les variables d'addition supérieure et inférieure correspondent respectivement à la valeur maximale et minimale d'une composante de ladite équation de régulation pour une certaine plage de variation des paramètres de ladite composante, ladite composante de l'équation de régulation s'ajoutant à la différence entre le courant pour l'axe en cours et sa consigne.

La régulation est plus rapide car elle tient toujours compte des pires cas. Il n'est plus nécessaire d'estimer les paramètres moyens mais de donner des bornes à ceux-ci, ce qui est beaucoup plus simple. On assure également une plus grande stabilité qu'avec des régulateurs classiques qui ne tiennent pas compte des dispersions des paramètres. On peut ainsi assurer une commande efficace lorsque que les paramètres réels de la machine sont dans la plage que l'on a choisie.

Selon une autre caractéristique supplémentaire, pour chacun des axes, les deux opérateurs linéaires comprennent une multiplication entre la valeur de l'inductance du moteur électrique suivant l'axe en cours, une constante dépendante de l'axe en cours et la différence entre le courant à réguler suivant l'axe en cours et sa consigne.

Les opérateurs sont directement issus de l'équation de régulation décrivant le fonctionnement d'un moteur électrique dans un repère de Park.

Selon un mode de mise en oeuvre, la régulation comprend pour chacun des axes, lorsque le courant à réguler suivant cet axe est suffisamment proche de sa consigne, l'application d'un troisième opérateur linéaire comprenant l'ajout d'une variable d'addition dépendant de la différence entre le courant à réguler suivant l'axe en cours et sa consigne.

On procède ainsi à un lissage de la commande lorsque les courants sont suffisamment proches de leurs consignes, afin de supprimer les oscillations dues aux deux opérateurs utilisés successivement.

Selon une caractéristique, la variable d'addition du troisième opérateur linéaire est déterminée en réalisant, pour une fenêtre d'interpolation donnée, l'interpolation entre la variable d'addition supérieure et la variable d'addition inférieure.

La variable d'addition du troisième opérateur évolue donc de manière continue lors du passage du premier au troisième opérateur ou lors du passage du deuxième au troisième opérateur.

L'invention a également pour objet un système de commande d'un groupe motopropulseur équipant un véhicule automobile et comprenant un moteur électrique muni d'un rotor et d'un stator, comprenant des moyens de régulation des courants du rotor et du stator pour qu'ils atteignent des valeurs de courants de consigne grâce à des signaux de commande du moteur électrique, lesdits courants à réguler et lesdits signaux de commande étant exprimés dans un repère tournant et comprenant une pluralité d'axes, lesdits signaux de commande étant issus d'une transformation comprenant un changement de variable permettant le découplage dynamique de la régulation suivant chacun des axes de ladite pluralité d'axes.

Selon une caractéristique générale, lesdits moyens de régulation comprennent pour chacun des axes de ladite pluralité d'axes des moyens d'application d'un premier opérateur linéaire sur le courant à réguler de cet axe, des moyens d'application d'un deuxième opérateur linéaire sur le courant à réguler de cet axe, des moyens de comparaison de la valeur du courant à réguler de cet axe par rapport à sa consigne et des moyens de gestion pour activer les moyens d'application d'un premier opérateur ou les moyens d'application d'un deuxième opérateur linéaire en fonction de la valeur du courant à réguler de cet axe par rapport à sa consigne, le résultat de l'application des deux opérateurs linéaires devant être sensiblement égal au signal de commande de cet axe.

Selon une caractéristique, pour chacun des axes, les deux opérateurs linéaires comprennent un ajout d'une variable d'addition, ladite variable d'addition étant différente en fonction des deux opérateurs linéaires, une variable d'addition supérieure étant utilisée par l'opérateur linéaire appliqué lorsque le courant de l'axe en cours est inférieur à sa consigne et une variable d'addition inférieure étant utilisée par l'opérateur linéaire appliqué lorsque le courant de l'axe en cours est supérieur à sa consigne.

Selon une autre caractéristique, pour chacun des axes, les deux opérateurs correspondent à une équation de régulation du courant de l'axe en cours et les variables d'addition supérieure et inférieure correspondent respectivement à la valeur maximale et minimale d'une composante de ladite équation de régulation pour une certaine plage de variation des paramètres de ladite composante, ladite composante de l'équation de régulation s'ajoutant à la différence entre le courant pour l'axe en cours et sa consigne.

Selon une autre caractéristique supplémentaire, pour chacun des axes, les deux opérateurs linéaires comprennent une multiplication entre la valeur de l'inductance du moteur électrique suivant l'axe en cours, une constante dépendante de l'axe en cours et la différence entre le courant à réguler suivant l'axe en cours et sa consigne.

Selon un mode de réalisation, pour chacun des axes, les moyens de régulation comprennent des moyens d'application d'un troisième opérateur linéaire capables d'appliquer un troisième opérateur linéaire comprenant l'ajout d'une variable d'addition sur le courant suivant cet axe, ladite variable d'addition dépendant de la différence entre le courant suivant cet axe et sa consigne et les moyens de gestion sont configurés pour, lorsque le courant à réguler suivant cet axe est suffisamment proche de sa consigne, activer les moyens d'application du troisième opérateur linéaire.

Selon une caractéristique, la variable d'addition du troisième opérateur linéaire est déterminée en réalisant, pour une fenêtre d'interpolation donnée, l'interpolation entre la variable d'addition supérieure et la variable d'addition inférieure.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un procédé de commande d'un groupe motopropulseur électrique;
- la figure 2 illustre le résultat du procédé de la figure 1;
- la figure 3 illustre un mode de réalisation d'un opérateur;
- la figure 4 illustre un autre procédé de commande d'un groupe motopropulseur électrique;

- la figure 5 illustre le résultat du procédé de commande de la figure 4; et
- la figure 6 illustre un système de commande mettant en oeuvre le procédé de la figure 4.

Pour assurer la régulation d'un groupe motopropulseur comprenant un moteur synchrone comprenant un stator et un rotor et équipant un véhicule, on utilise un repère de Park qui permet d'exprimer les grandeurs électriques dans un repère tournant par exemple lié au rotor dans le cas d'un moteur synchrone. Ce repère comprend trois axes : d, q, et f. Les axes d et q sont associés au stator et l'axe f est associé au rotor.

Les signaux de commandes du moteur électrique $V_d$, $V_q$, $V_f$ et les consignes de courant appliqués $I_d, I_q, I_f$ correspondent aux composantes d'un signal de commande et d'un courant suivant respectivement les axes : d, q, f.

Dans le repère de Park, un groupe motopropulseur comprenant un moteur synchrone est régi par les équations suivantes :

$$V_d = R_s \cdot I_d + L_d \cdot \frac{dI_d}{dt} + M_f \cdot \frac{dI_f}{dt} - \omega_r \cdot L_q \cdot I_q$$

$$V_q = R_s \cdot I_q + L_q \cdot \frac{dI_q}{dt} + \omega_r \left( L_d \cdot I_d + M_f \cdot I_f \right) \qquad (Eq.1)$$

$$V_f = R_f \cdot I_f + L_f \cdot \frac{dI_f}{dt} + \alpha \cdot M_f \cdot \frac{dI_d}{dt}$$

Avec :

$L_d$ : Inductance équivalente d'induit sur l'axe d.
$L_q$ : Inductance équivalente d'induit sur l'axe q.
$L_f$ : Inductance du rotor.
$R_s$ : Résistance équivalente d'enroulements statoriques.
$R_f$ : Résistance du rotor.
$M_f$ : Mutuelle inductance entre le stator et le rotor.
$I_d$ : Courant sur l'axe d.
$I_q$ : Courant sur l'axe q.
$I_f$ : Courant sur l'axe f.
$\omega_r$ : Vitesse de rotation du champ magnétique de la machine (comme il s'agit d'une machine synchrone, elle est égale à la vitesse de rotation du rotor multiplié par le nombre de pairs de pôles de la machine) (en rad/s)
$V_d$ : signal de commande du moteur électrique suivant axe d.
$V_q$ : signal de commande du moteur électrique suivant axe q.
$V_f$ : signal de commande du moteur électrique suivant axe f.
$\alpha$ : un coefficient, $\alpha=3/2$ de préférence.

Les principales difficultés que présentent la commande de ce type de système résident dans le couplage dynamique entre les axes d et f.

Pour éviter le couplage dynamique entre les axes d et f, il est prévu un changement de variables: $(\tilde{V}_d, \tilde{V}_q, \tilde{V}_f)$ = $S(V_d, V_q. V_f)$, utilisant l'équation ci après :

$$V_d = \tilde{V}_d - \frac{M_f}{L_f} \cdot \left( R_f \cdot I_f + \frac{\alpha \cdot M_f}{L_d} \cdot \left( \omega_r \cdot L_q \cdot I_q - R_s \cdot I_d \right) - \tilde{V}_f \right)$$

$$V_q = \tilde{V}_q \qquad\qquad (Eq.\ 2)$$

$$V_f = \tilde{V}_f + \frac{\alpha \cdot M_f}{L_d} \cdot \tilde{V}_d$$

Le système à contrôler peut alors être représenté par l'équation de régulation suivante :

$$\tilde{V}_d = R_s \cdot I_d + L_d \cdot \frac{dI_d}{dt} - \omega_r \cdot L_q \cdot I_q$$

$$\tilde{V}_q = R_s \cdot I_q + L_q \cdot \frac{dI_q}{dt} + \omega_r \cdot \left( L_d \cdot I_d + M_f \cdot I_f \right) \qquad (Eq.\ 3)$$

$$\tilde{V}_f = R_f \cdot I_f + L_f \cdot \frac{dI_f}{dt} - \frac{\alpha \cdot M_f}{L_d} \cdot \left( R_s \cdot I_d - \omega_r \cdot L_q \cdot I_q \right)$$

Avec :

$\tilde{V}_d$ : Tension découplée stator sur l'axe d.
$\tilde{V}_q$ : Tension stator sur l'axe q.
$\tilde{V}_f$ : Tension découplée du rotor.
et $\alpha = 3/2$ de préférence.

Ainsi, suivant cette équation de régulation il est possible de contrôler avec une tension selon l'axe d ($\tilde{V}_d$) la composante dérivée du courant suivant l'axe d ($I_d$) uniquement. De même, la tension selon l'axe q ($\tilde{V}_q$) et la tension du rotor ($\tilde{V}_f$) selon l'axe f ne dépendent des dérivés du courant que par la composante du courant suivant l'axe q ($I_q$) et suivant l'axe f ($I_f$) respectivement. Les couplages dynamiques entre les axes d, q, f sont donc supprimés au niveau du régulateur qui utilise cette équation de régulation.

Comme on peut le voir, il n'y a pas de changement de variable sur l'axe q qui ne présente pas de couplage dynamique. Le couplage dynamique est entre les axes d et f, d'où les nouvelles commandes découplées sur ces 2 axes.

Dans le nouvel espace, on peut noter :

$$\tilde{V}_d = A_d + L_d \cdot \frac{dI_d}{dt}$$
$$\tilde{V}_q = A_q + L_q \cdot \frac{dI_q}{dt} \quad avec \quad \begin{aligned} A_d &= R_s I_d - \omega_r L_q I_q \\ A_q &= R_s I_q + \omega_r \left( L_d I_d + M_f I_f \right) \end{aligned} \qquad (Eq.\ 4)$$
$$\tilde{V}_f = A_f + L_f \cdot \frac{dI_f}{dt} \qquad A_f = R_f I_f - \frac{\alpha M_f}{L_d} \left( R_s I_d - \omega_r L_q I_q \right)$$

Les termes $A_d, A_q, A_f$ dépendent de paramètres tels que les inductances, les résistances et la mutuelle inductance. On définit une plage de variation possible pour chaque paramètre pour chaque axe:

- Axe d : $R_s \in [R_{s\,min}; R_{s\,max}]$, $\omega_r \in [\omega_{r\,min}; \omega_{r\,max}]$ et $L_q \in [L_{q\,min}; L_{q\,max}]$.
- Axe q : $R_s \in [R_{s\,min}; R_{s\,max}]$, $\omega_r \in [\omega_{r\,min}; \omega_{r\,max}]$, $M_f \in [M_{f\,min}; M_{f\,max}]$ et $L_d \in [L_{d\,min}; L_{d\,max}]$.
- Axe f : $R_f \in [R_{f\,min}; R_{f\,max}]$, $R_s \in [R_{s\,min}; R_{s\,max}]$, $M_f \in [M_{f\,min}; M_{f\,max}]$, $\omega_r \in [\omega_{r\,min}; \omega_{r\,max}]$, $L_q \in [L_{q\,min}; L_{q\,max}]$ et $L_d \in [L_{d\,min}; L_{d\,max}]$.

Avec ces plages, on peut calculer pour l'axe d, les composantes $A_d^-$ et $A_d^+$ correspondant au minimum et au maximum que peut valoir le terme $A_d$ pour un triplet $I_d, I_q, I_f$ donné, de même pour l'axe q les composantes $A_q^-$ et $A_q^+$ correspondant au minimum et au maximum que peut valoir le terme $A_q$ pour un triplet $I_d, I_q, I_f$ donné et enfin pour l'axe f les composantes $A_f^-$ et $A_f^+$ correspondant au minimum et au maximum que peut valoir le terme $A_f$ pour un triplet $I_d, I_q, I_f$ donné.

Si les paramètres sont bien dans les plages définies alors on doit avoir :

- sur l'axe d: $A_d^- \le A_d^{reel} \le A_d^+$

- sur l'axe f: $A_f^- \le A_f^{reel} \le A_f^+$

- sur l'axe q: $A_q^- \le A_q^{reel} \le A_q^+$

Le principe de la commande est alors basé sur les équations suivantes:

$$\tilde{V}_d = \begin{cases} A_d^- - \lambda_d L_{d_{max}} \left( I_d - I_d^c \right) & I_d \ge I_d^c \\ A_d^+ - \lambda_d L_{d_{max}} \left( I_d - I_d^c \right) & I_d \le I_d^c \end{cases}$$

$$\tilde{V}_q = \begin{cases} A_q^- - \lambda_q L_{q_{max}} \left( I_q - I_q^c \right) & I_q \ge I_q^c \\ A_q^+ - \lambda_q L_{q_{max}} \left( I_q - I_q^c \right) & \text{si} \quad I_q \le I_q^c \end{cases} \qquad \text{(Eq. 5)}$$

$$\tilde{V}_f = \begin{cases} A_f^- - \lambda_f L_{f_{max}} \left( I_f - I_f^c \right) & I_f \ge I_f^c \\ A_f^+ - \lambda_f L_{f_{max}} \left( I_f - I_f^c \right) & I_f \le I_f^c \end{cases}$$

Avec $I_d^c$, $I_q^c$ et $I_f^c$ les consigne de courant sur chacun des axes.

Ainsi, dans tous les cas, la dérivée du courant a le bon signe par rapport à la consigne. Par exemple sur l'axe d dans le cas où $I_d \ge I_d^c$ on a d'après (4) et (5) :

$$L_d \cdot \frac{dI_d}{dt} = \tilde{V}_d - A_d^{reel} = A_d^- - A_d^{reel} - \lambda_d L_{d_{max}} \left( I_d - I_d^c \right) \le 0$$

On obtient donc des courants se dirigeant toujours vers leurs consignes.

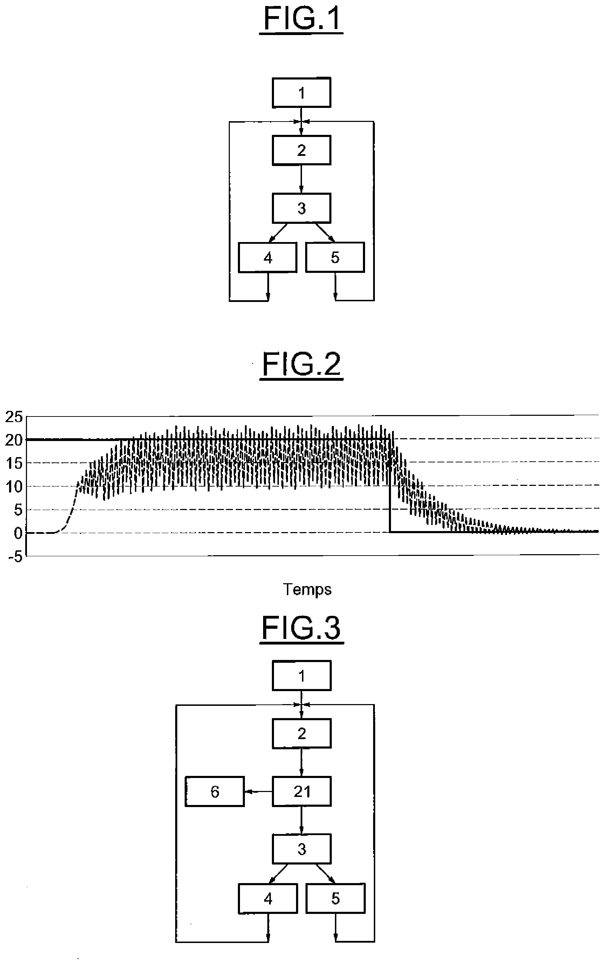

Un exemple de procédé de régulation mettant en oeuvre les équations ci dessus pour un des axes est illustré sur la figure 1.

Ce procédé de commande permet à partir des signaux de commandes d'un des axes $\tilde{V}_d$, $\tilde{V}_q$ ou $\tilde{V}_f$ de contrôler les courants à réguler de l'axe correspondant $I_d$, $I_q$ ou $I_f$ de manière à satisfaire les consignes de courant $I_d^C$, $I_q^C$ ou $I_f^C$ correspondant aux demandes en couple à la roue. La description du procédé ci-après concerne l'axe q, cela étant, le procédé suivant l'axe d ou f est similaire.

Le procédé comprend :

- une première étape 1 d'acquisition des consignes de courant, à savoir la consigne $I_q^C$ qui est la consigne de courant stator sur l'axe q;

- une deuxième étape 2 au cours de laquelle le courant suivant l'axe q, $I_q$ est mesuré;

- une troisième étape 3 au cours de laquelle le courant $I_q$ mesuré suivant l'axe q est comparé avec sa consigne $I_q^C$.

Si le courant mesuré est supérieur à sa consigne $I_q^C$ alors l'étape 4 est déclenchée, si le courant mesuré est inférieur à sa consigne $I_q^C$ alors l'étape 5 est déclenchée.

L'étape 4 correspond à l'application d'un opérateur linéaire OP1q sur le courant suivant l'axe q suivant l'équation :

$$A_q^- - \lambda_q L_{q_{max}} \left( I_q - I_q^c \right) \ pour \ I_q \geq \bar{I}_q^c,$$

De même l'étape 5 correspond à l'application d'un opérateur linéaire OP2q sur le courant suivant l'axe q suivant l'équation :

$$A_q^+ - \lambda_q L_{q_{max}} \left( I_q - I_q^c \right) \ pour \ I_q \leq I_q^c,$$

Suivant l'équation 5 (Eq. 5), le résultat de l'application des opérateurs OP1q et OP2q doit être égal à $\tilde{V}_q$, on peut donc avec l'étape 4 ou l'étape 5 contrôler le courant $I_q$ en faisant varier $\tilde{V}_q$. En d'autres termes, on contrôle indirectement $I_q$ en contrôlant le résultat de l'opérateur OP1q et OP2q.

Suite à la réalisation de l'étape 4 ou 5, on revient à l'étape 2.

La figure 2 illustre le résultat d'un contrôle du courant suivant un procédé tel que celui décrit à la figure 1. La figure 2 comprend un repère comprenant deux axes, un axe horizontal représentant le temps et un axe vertical représentant l'intensité exprimée en ampère. Sur ce repère se trouvent une première courbe rectangulaire qui représente la consigne $I_q^C$ et une deuxième courbe qui oscille qui représente le courant $I_q$. Il apparait que le courant $I_q$ va se rapprocher de la consigne $I_q^C$ mais en faisant de nombreuses oscillations autour de la consigne.

En fait, le problème de ce régulateur est qu'il fonctionne à une certaine fréquence, cette fréquence aussi importante qu'elle puisse être ne permet pas une commande appliquée et calculée de manière continue. Ainsi, le courant va donc osciller autour de la consigne, la commande sautera à chaque fois en fonction de l'application de l'opérateur OP1q ou OP2q.

Afin de supprimer les oscillations, selon une amélioration du procédé de la figure 1, on procède à un lissage de la commande en effectuant une interpolation linéaire entre les deux valeurs $A_q^-$ et $A_q^+$ lorsque les courants sont suffisamment proches de leurs consignes.

Un exemple de procédé de régulation amélioré est illustré sur la figure 3. La description du procédé ci-après concerne l'axe q, cela étant, le procédé suivant l'axe d ou f est similaire.

En plus des étapes des étapes 1, 2, 3, 4, 5 qui sont identiques à celle du procédé de la figure 1, le procédé de la figure 3 comprend :

- une étape 21 de comparaison du courant suivant l'axe q $I_q$ et de sa consigne $I_q^C$. Au cours de cette étape il est testé si $\left| I_q - I_q^c \right| \leq \varepsilon_q$, avec $\varepsilon_q$ la valeur d'une fenêtre d'interpolation (décrite en détail ci après). On teste ainsi si le courant $I_q$ est suffisamment proche de sa consigne $I_q^C$; et

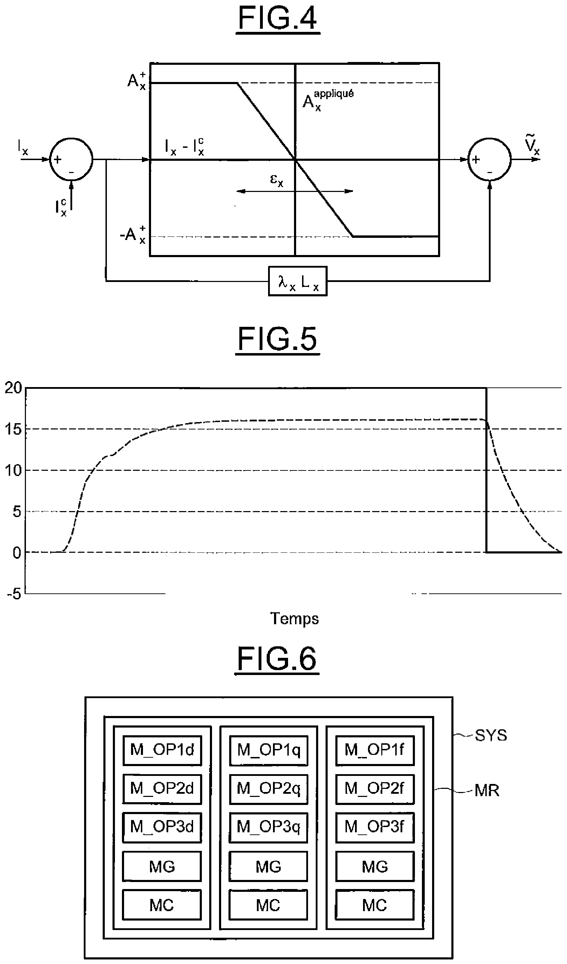

- une étape 6 au cours de laquelle si le courant $I_q$ est suffisamment proche de sa consigne $I_q^C$, on applique un opérateur OP3q décrit ci après sur la figure 4.

Au contraire, si le courant $I_q$ n'est pas suffisamment proche de sa consigne $I_q^C$ alors le procédé se poursuit vers les étapes 3, 4 et 5.

Le résultat de l'application de l'opérateur OP3q doit suivant l'équation 5 (Eq. 5) être égal à $\tilde{V}_q$. On peut donc avec l'étape 6 de la figure 3 de manière identique aux étapes 4 et 5 contrôler le courant $I_q$ en faisant varier $\tilde{V}_q$.

La figure 4 illustre un mode de réalisation d'un opérateur OP3x avec x prenant les valeurs d, q, ou f pour chacun des axes. Il comprend :

- un soustracteur pour soustraire le courant de consigne $I_x^C$ du courant à réguler $I_x$;

- un module $\lambda_x L_{x_{max}}$ pour multiplier le résultat de la soustraction par $\lambda_x L_{x_{max}}$ ($L_{x_{max}}$ étant la valeur maximale de l'inductance suivant l'axe x avec x prenant pour valeur d, q ou f); et

- un module d'interpolation dans lequel est déterminé la variable d'addition $A_x^{appliqué}$. Cette variable d'addition dépend notamment de la différence entre le courant à réguler $I_x$ et sa consigne $I_x^C$. Elle est le résultat de l'interpolation entre $A_x^+$ et $A_x^-$ pour une fenêtre d'interpolation $\varepsilon_x$ donnée. En d'autres termes, lorsque la valeur absolue de la différence entre le courant à réguler $I_x$ et sa consigne $I_x^C$ est inférieure à $\varepsilon_x$ alors on détermine la valeur de la variable d'addition $A_x^{appliqué}$ en multipliant ladite différence par la pente de la droite reliant les deux droites d'ordonnée $A_x^-$ et $A_x^+$. Ces deux droites représentent les variables d'addition des opérateurs OP1x et OP2x (OP2x d'ordonnée $A_x^+$ et OP1x d'ordonnée $A_x^+$) lorsque la valeur absolue de la différence entre le courant à réguler $I_x$ et sa consigne $I_x^C$ est supérieure à $\varepsilon_x$. On a donc une valeur de la variable d'addition de OP3x qui évolue de manière continue lors du passage de l'opérateur OP1x à OP3x ou de l'opérateur OP2x à OP3x.

L'opérateur appliqué est ainsi pour chacun des trois axes d, q et f : $A_x^{appliqué} - \lambda_x L_{x_{max}} \left( I_x - I_x^c \right)$ avec x prenant pour valeurs d, q et f.

Pour chaque axe, il y a donc deux paramètres à définir : la composante proportionnelle $\lambda_x$ et l'amplitude de l'interpolation linéaire $\varepsilon_x$. Il est également nécessaire d'estimer la plage de variation des paramètres pour assurer le fonctionnement de la commande.

On dispose alors d'une commande assurant la bonne variation du courant sans utiliser de terme intégral qui présentait l'inconvénient de diverger en cas d'erreur sur un paramètre.

La figure 5 illustre le résultat d'un contrôle du courant suivant un procédé tel que celui décrit à la figure 3. Le repère de la figure 5 identique à celui de la figure 2, comprend une première courbe rectangulaire qui représente la consigne $I_q^C$ et une deuxième courbe arrondie qui représente le courant $I_q$. Il apparaît que le courant $I_q$ va se rapprocher de la consigne $I_q^C$ sans les oscillations autour de la consigne de la figure 2.

La figure 6 illustre un système SYS de commande permettant de mettre en place le procédé de la figure 3. Le système SYS comprend des moyens de régulation MR des courants $I_d, I_q, I_f$ du rotor et du stator.

Les moyens de régulation MR comprennent pour l'axe d :

- des moyens d'application sur le courant à réguler de l'axe d $I_d$ de trois opérateurs linéaires différents M_OP1d, M_OP2d et M_OP3d;

- des moyens de comparaison MCd de la valeur du courant $I_d$ par rapport à sa consigne $I_d^C$; et

- des moyens de gestion MGd configurés pour activer les moyens M_OP1d et M_OP2d en fonction de la valeur du courant $I_d$ par rapport à sa consigne $I_d^C$. Les moyens de gestion MGd sont également configurés pour lorsque le courant à réguler $I_d$ est suffisamment proche de sa consigne $I_d^C$ activer les moyens d'application M_OP3d.

De même, les moyens de régulation MR comprennent pour l'axe q et pour l'axe f :

- des moyens d'application sur le courant à réguler de l'axe q d'une part et de l'axe f d'autre part de trois opérateurs linéaires différents: M_OP1q, M_OP2q, M_OP3q et M_OP1f, M_OP2f et M_OP3f;

- des moyens MCq pour comparer la valeur du courant $I_q$ par rapport à sa consigne $I_q^C$ et des moyens MCf pour comparer la valeur du courant $I_f$ par rapport à sa consigne $I_f^C$;

- des moyens de gestion MGq configurés pour activer les moyens M_OP1q et M_OP2q en fonction de la valeur du courant $I_q$ par rapport à sa consigne $I_q^C$ et des moyens MGf configurés pour activer les moyens M_OP1f, M_OP2f en fonction de la valeur du courant $I_f$ par rapport à sa consigne $I_f^C$. Les moyens de gestion MGq sont également configurés pour activer les moyens d'application M_OP3q lorsque le courant à réguler $I_q$ est suffisamment proche de sa consigne $I_q^C$ et les moyens de gestion MGf sont également configurés pour activer les moyens d'application M_OP3f lorsque $I_f$ est suffisamment proche de sa consigne $I_f^C$.

Cette stratégie de régulation offre l'avantage de toujours faire varier les courants dans la direction de la consigne tant que les paramètres réels de la machine sont dans la plage que l'on a choisie. On assure donc une plus grande stabilité qu'avec des régulateurs classiques qui ne tiennent pas compte des dispersions des paramètres.

De plus, la régulation est plus rapide car elle tient toujours compte des pires cas. Il n'est plus nécessaire d'estimer les paramètres moyens mais de donner des bornes à ceux-ci, ce qui est beaucoup plus simple.

## Revendications

1. Procédé de commande d'un groupe motopropulseur équipant un véhicule automobile et comprenant un moteur électrique muni d'un rotor et d'un stator, comprenant une régulation des courants ($I_d, I_q, I_f$) du rotor et du stator pour qu'ils atteignent des valeurs de courants de consigne $(I_d^C, I_q^C, I_f^C)$ grâce à des signaux de commande ($\tilde{V}_d, \tilde{V}_q, \tilde{V}_f$) du moteur électrique, lesdits courants à réguler ($I_d, I_q, I_f$) et lesdits signaux de commande ($\tilde{V}_d, \tilde{V}_q, \tilde{V}_f$) étant exprimés dans un repère tournant et comprenant une pluralité d'axes ($d, q, f$), lesdits signaux de commande ($\tilde{V}_d, \tilde{V}_q, \tilde{V}_f$) étant issus d'une transformation comprenant un changement de variable permettant le découplage dynamique de la régulation suivant chacun des axes de ladite pluralité d'axes,
**caractérisé en ce que** ladite régulation comprend pour chacun des axes ($d, q, f$) de ladite pluralité d'axes une application (4, 5) d'un premier (OP1d, OP1q, OP1f) ou d'un deuxième (OP2d, OP2q, OP2f) opérateur linéaire selon lesquels l'équation de régulation est de la forme :

$$\widetilde{V}_x = A_x^- - \lambda_x L_{x_{\max}} \left( I_x - I_x^c \right) \ si \ I_x \geq I_x^c ,$$

ou

$$\widetilde{V}_x = A_x^+ - \lambda_x L_{x_{\max}} \left( I_x - I_x^c \right) \ si \ I_x \leq I_x^c ,$$

dans laquelle $I_x$ est le courant à réguler suivant l'axe considéré ($d, q, f$), $I_x^c$ est le courant de consigne suivant ledit axe considéré ($d, q, f$), $\tilde{V}_x$ est le signal de commande pour ledit axe considéré ($d, q, f$), $A_x^+$ et $A_x^-$ sont des variables d'addition pour ledit axe considéré ($d, q, f$), la variable $A_x^+$ étant supérieure à la variable $A_x^-$, $L_{xmax}$ est une valeur maximale d'inductance du moteur pour ledit axe considéré ($d, q, f$) et $\lambda_x$ est une constante donnée pour ledit axe considéré ($d, q, f$), le résultat de l'application des deux opérateurs linéaires (OP1d, OP2d, OP1q, OP2q, OP1f, OP2f) devant être sensiblement égal au signal de commande ($\tilde{V}_d, \tilde{V}_q, \tilde{V}_f$) de cet axe.

2. Procédé selon la revendication 1, dans lequel la régulation comprend pour chacun des axes, lorsque le courant à réguler suivant cet axe est suffisamment proche (21) de sa consigne, l'application (6) d'un troisième opérateur linéaire (OP3d, OP3q, OP3f) selon lequel l'équation de régulation comprend l'ajout d'une variable d'addition $\left( A_x^{appliqué} \right)$ dépendant de la différence entre le courant à réguler suivant l'axe en cours ($I_d, I_q, I_f$) et sa consigne $(I_d^C, I_q^C, I_f^C)$.

3. Procédé selon la revendication 2, dans lequel la variable d'addition du troisième opérateur linéaire (OP3d, OP3q, OP3f) est déterminée en réalisant, pour une fenêtre d'interpolation donnée ($\varepsilon_x$), l'interpolation entre la variable d'addition supérieure $( A_x^+ )$ et la variable d'addition inférieure $( A_x^- )$.

4. Système de commande d'un groupe motopropulseur équipant un véhicule automobile et comprenant un moteur électrique muni d'un rotor et d'un stator, comprenant des moyens de régulation des courants ($I_d, I_q, I_f$) du rotor et du stator pour qu'ils atteignent des valeurs de courants de consigne $(I_d^C, I_q^C, I_f^C)$ grâce à des signaux de commande ($\tilde{V}_d, \tilde{V}_q, \tilde{V}_f$) du moteur électrique, lesdits courants à réguler ($I_d, I_q, I_f$) et lesdits signaux de commande ($\tilde{V}_d, \tilde{V}_q, \tilde{V}_f$) étant exprimés dans un repère tournant et comprenant une pluralité d'axes ($d, q, f$), lesdits signaux de commande ($\tilde{V}_d, \tilde{V}_q, \tilde{V}_f$) étant issus d'une transformation comprenant un changement de variable permettant le découplage dynamique de la régulation suivant chacun des axes de ladite pluralité d'axes,
**caractérisé en ce que** lesdits moyens de régulation (MR) comprennent pour chacun des axes ($d, q, f$) de ladite pluralité d'axes des moyens d'application d'un premier (M_OP1d, M_OP1q, M_OP1f) ou d'un deuxième (M_OP2d, M_OP2q, M_OP2f) opérateur linéaire selon lesquels l'équation de régulation est de la forme :

$$\tilde{V}_x = A_x^- - \lambda_x L_{x_{\max}} \left( I_x - I_x^c \right) \ si \ I_x \geq I_x^c,$$

ou

$$\tilde{V}_x = A_x^+ - \lambda_x L_{x_{\max}} \left( I_x - I_x^c \right) \ si \ I_x \leq I_x^c,$$

dans laquelle $I_x$ est le courant à réguler suivant l'axe considéré ($d, q, f$), $I_x^c$ est le courant de consigne suivant ledit axe considéré ($d, q, f$), $\tilde{V}_x$ est le signal de commande pour ledit axe considéré ($d, q, f$), $A_x^+$ et $A_x^-$ sont des variables d'addition pour ledit axe considéré ($d, q, f$), la variable $A_x^+$ étant supérieure à la variable $A_x^-$, $L_{x\max}$ est une valeur d'inductance maximale du moteur pour ledit axe considéré ($d, q, f$) et $\lambda_x$ est une constante donnée pour ledit axe considéré ($d, q, f$), le résultat de l'application des deux opérateurs linéaires (M_OP1d, M_OP2d, M_OP1q, M_OP2q, M_OP1f, M_OP2f) devant être sensiblement égal au signal de commande ($\tilde{V}_d, \tilde{V}_q, \tilde{V}_f$) de cet axe.

5. Système selon la revendication 4, dans lequel pour chacun des axes, les moyens de régulation comprennent :

   - des moyens d'application d'un troisième opérateur linéaire (M_OP3d, M_OP3q, M_OP3f) capables d'appliquer un troisième opérateur linéaire (OP3d, OP3q, OP3f) selon lequel l'équation de régulation comprend l'ajout d'une variable d'addition $( A_x^{appliqué} )$ sur le courant suivant cet axe ($I_d, I_q, I_f$), ladite variable d'addition dépendant de la différence entre le courant suivant cet axe ($I_d, I_q, I_f$), et sa consigne $(I_d^C, I_q^C, I_f^C)$ ;
   - et des moyens de gestion (MGd, MGq, MGf) configurés pour, lorsque le courant à réguler suivant cet axe ($I_d, I_q, I_f$), est suffisamment proche de sa consigne $(I_d^C, I_q^C, I_f^C)$, activer les moyens d'application du troisième opérateur linéaire (M_OP3d, M_OP3q, M_OP3f).

6. Système selon la revendication 5, dans lequel la variable d'addition du troisième opérateur linéaire $( A_x^{appliqué} )$ est déterminée en réalisant, pour une fenêtre d'interpolation donnée ($\varepsilon_x$), l'interpolation entre la variable d'addition supérieure $( A_x^+ )$ et la variable d'addition inférieure $( A_x^- )$.

**Patentansprüche**

1. Verfahren zur Steuerung eines Antriebsstrangs, mit dem ein Kraftfahrzeug ausgestattet ist und der einen Elektromotor mit einem Rotor und einem Stator umfasst, umfassend eine Regelung der Ströme ($I_d$, $I_q$, $I_f$) des Rotors und des Stators, damit sie Stromsollwerte $(I_d^C,\ I_q^C,\ I_f^C)$ erreichen, mithilfe von Steuersignalen ($\tilde{V}_d$, $\tilde{V}_q$, $\tilde{V}_f$) des Elektromotors, wobei die zu regelnden Ströme ($I_d$, $I_q$, $I_f$) und die Steuersignale ($\tilde{V}_d$, $\tilde{V}_q$, $\tilde{V}_f$) in einem drehenden Koordinatensystem mit einer Vielzahl von Achsen (*d, q, f*) ausgedrückt werden, wobei die Steuersignale ($\tilde{V}_d$, $\tilde{V}_q$, $\tilde{V}_f$) aus einer Transformation hervorgehen, die eine Variablenänderung umfasst, die die dynamische Entkopplung der Regelung gemäß jeder der Achsen der Vielzahl von Achsen ermöglicht,
**dadurch gekennzeichnet, dass** die Regelung für jede der Achsen (*d, q, f*) der Vielzahl von Achsen eine Anwendung (4, 5) eines ersten (OP1d, OP1q, OP1f) oder eines zweiten (OP2d, OP2q, OP2f) linearen Operators umfasst, gemäß denen die Regelungsgleichung die folgende Form hat:

$$\tilde{V}_x = A_x^- - \lambda_x L_{xmax}(I_x - I_x^C),\ \text{wenn}\ I_x \geq I_x^C$$

$$\text{oder}\ \tilde{V}_x = A_x^+ - \lambda_x L_{xmax}(I_x - I_x^C),\ \text{wenn}\ I_x \leq I_x^C$$

wobei $I_x$ der zu regelnde Strom gemäß der betrachten Achse (*d, q, f*) ist, $I_x^C$ der Sollstrom gemäß der betrachteten Achse (*d, q, f*) ist, $\tilde{V}_x$ das Steuersignal für die betrachtete Achse (*d, q, f*) ist, $A_x^+$ und $A_x^-$ Additionsvariablen für die betrachtete Achse (*d, q, f*) sind, wobei die Variable $A_x^+$ größer als die Variable $A_x^-$ ist, $L_{xmax}$ ein Induktivitäts-höchstwert des Motors für die betrachtete Achse (*d, q, f*) ist und $\lambda_x$ eine gegebene Konstante für die betrachtete Achse (*d, q, f*) ist, wobei das Ergebnis der Anwendung der beiden linearen Operatoren (OP1d, OP2d, OP1q, OP2q, OP1f, OP2f) im Wesentlichen gleich dem Steuersignal ($\tilde{V}_d$, $\tilde{V}_q$, $\tilde{V}_f$) dieser Achse sein muss.

2. Verfahren nach Anspruch 1, wobei die Regelung für jede der Achsen, wenn der gemäß dieser Achse zu regelnde Strom seinem Sollwert ausreichend nah (21) ist, die Anwendung (6) eines dritten linearen Operators (OP3d, OP3q, OP3f) umfasst, gemäß dem die Regelungsgleichung das Hinzufügen einer Additionsvariable $(A_x^{angewandt})$ umfasst, die von der Differenz zwischen dem gemäß der aktuellen Achse zu regelnden Strom ($I_d$, $I_q$, $I_f$) und seinem Sollwert $(I_d^C,\ I_q^C,\ I_f^C)$ abhängig ist.

3. Verfahren nach Anspruch 2, wobei die Additionsvariable des dritten linearen Operators (OP3d, OP3q, OP3f) bestimmt wird, indem für ein gegebenes Interpolationsfenster ($\varepsilon_x$) die Interpolation zwischen der oberen Additionsvariable $(A_x^+)$ und der unteren Additionsvariable $(A_x^-)$ ausgeführt wird.

4. System zur Steuerung eines Antriebsstrangs, mit dem ein Kraftfahrzeug ausgestattet ist und der einen Elektromotor mit einem Rotor und einem Stator umfasst, umfassend Mittel zur Regelung der Ströme ($I_d$, $I_q$, $I_f$) des Rotors und des Stators, damit sie Stromsollwerte $(I_d^C,\ I_q^C,\ I_f^C)$ erreichen, mithilfe von Steuersignalen ($\tilde{V}_d$, $\tilde{V}_q$, $\tilde{V}_f$) des Elektromotors, wobei die zu regelnden Ströme ($I_d$, $I_q$, $I_f$) und die Steuersignale ($\tilde{V}_d$, $\tilde{V}_q$, $\tilde{V}_f$) in einem drehenden Koordinatensystem mit einer Vielzahl von Achsen (*d, q, f*) ausgedrückt werden, wobei die Steuersignale ($\tilde{V}_d$, $\tilde{V}_q$, $\tilde{V}_f$) aus einer Transformation hervorgehen, die eine Variablenänderung umfasst, die die dynamische Entkopplung der Regelung gemäß jeder der Achsen der Vielzahl von Achsen ermöglicht,
**dadurch gekennzeichnet, dass** die Regelungsmittel (MR) für jede der Achsen (*d, q, f*) der Vielzahl von Achsen Mittel zur Anwendung eines ersten (M_OP1d, M_OP1q, M_OP1f) oder eines zweiten (M_OP2d, M_OP2q, M_OP2f) linearen Operators umfassen, gemäß denen die Regelungleichung die folgende Form hat:

$$\tilde{V}_x = A_x^- - \lambda_x L_{xmax}(I_x - I_x^C),\ \text{wenn}\ I_x \geq I_x^C$$

oder

$$\tilde{V}_x = A_x^+ - \lambda_x L_{xmax}(I_x - I_x^c), \text{ wenn } I_x \leq I_x^c$$

wobei $I_x$ der zu regelnde Strom gemäß der betrachten Achse ($d, q, f$) ist, $I_x^c$ der Sollstrom gemäß der betrachteten Achse ($d, q, f$) ist, $\tilde{V}_x$ das Steuersignal für die betrachtete Achse ($d, q, f$) ist, $A_x^+$ und $A_x^-$ Additionsvariablen für die betrachtete Achse ($d, q, f$) sind, wobei die Variable $A_x^+$ größer als die Variable $A_x^-$ ist, $L_{xmax}$ ein Induktivitäts-höchstwert des Motors für die betrachtete Achse ($d, q, f$) ist und $A_x$ eine gegebene Konstante für die betrachtete Achse ($d, q, f$) ist, wobei das Ergebnis der Anwendung der beiden linearen Operatoren (M_OP1d, M_OP2d, M_OP1q, M_OP2q, M_OP1f, M_OP2f) im Wesentlichen gleich dem Steuersignal ($\tilde{V}_d$, $\tilde{V}_q$, $\tilde{V}_f$) dieser Achse sein muss.

5. System nach Anspruch 4, wobei die Regelungsmittel für jede der Achsen umfassen:

- Mittel zur Anwendung eines dritten linearen Operators (M_OP3d, M_OP3q, M_OP3f), die geeignet sind, einen dritten linearen Operator (OP3d, OP3q, OP3f) anzuwenden, gemäß dem die Regelungsgleichung das Hinzu-fügen einer Additionsvariable $(A_x^{angewandt})$ zu dem Strom gemäß dieser Achse ($I_d, I_q, I_f$) umfasst, wobei die Additionsvariable von der Differenz zwischen dem Strom gemäß dieser Achse ($I_d, I_q, I_f$) und seinem Sollwert $(I_d^C, I_q^C, I_f^C)$ abhängig ist;
- und Verwaltungsmittel (MGd, MGq, MGf), die so gestaltet sind, dass sie, wenn der gemäß dieser Achse zu regelnde Strom ($I_d, I_q, I_f$) seinem Sollwert $(I_d^C, I_q^C, I_f^C)$ ausreichend nah ist, die Mittel zur Anwendung des dritten linearen Operators (M_OP3d, M_OP3q, M_OP3f) aktivieren.

6. System nach Anspruch 5, wobei die Additionsvariable des dritten linearen Operators $(A_x^{angewandt})$ bestimmt wird, indem für ein gegebenes Interpolationsfenster ($\varepsilon_x$) die Interpolation zwischen der oberen Additionsvariable $(A_x^+)$ und der unteren Additionsvariable $(A_x^-)$ ausgeführt wird.

## Claims

1. Method for controlling a power train equipping a motor vehicle and comprising an electric motor provided with a rotor and a stator, comprising a regulation of the currents ($I_d, I_q, I_f$) in the rotor and in the stator so that they reach required current values $(I_d^C, I_q^C, I_f^C)$ using control signals ($\tilde{V}_d, \tilde{V}_q, \tilde{V}_f$) of the electric motor, said currents to be regulated ($I_d, I_q, I_f$) and said control signals ($\tilde{V}_d, \tilde{V}_q, \tilde{V}_f$) being expressed in a rotating reference frame comprising a plurality of axes ($d, q, f$), said control signals ($\tilde{V}_d, \tilde{V}_q, \tilde{V}_f$) resulting from a transformation comprising a change of variable allowing the dynamic decoupling of the regulation along each of the axes of said plurality of axes, **characterized in that** said regulation comprises, for each of the axes ($d, q, f$) of said plurality of axes, an application (4, 5) of a first (OP1d, OP1q, OP1f) or of a second (OP2d, OP2q, OP2f) linear operator according to which the regulation equation takes the form:

$$\tilde{V}_x = A_x^- - \lambda_x L_{x_{max}}\left(I_x - I_x^c\right) \ si \ I_x \geq I_x^c,$$

or

$$\tilde{V}_x = A_x^+ - \lambda_x L_{x_{max}}\left(I_x - I_x^c\right) \ si \ I_x \leq I_x^c,$$

in which $I_x$ is the current to be regulated along the axis under consideration ($d, q, f$), $I_x^c$ is the setpoint current along said axis under consideration (*d, q, f*), $\tilde{V}_x$ is the control signal for said axis under consideration (*d, q, f*), $A_x^+$ and $A_x^-$ are addition variables for said axis under consideration (*d, q, f*), the variable $A_x^+$ being higher than the variable $A_x^-$, $L_{xmax}$ is a maximum inductance value of the motor for said axis under consideration (*d, q, f*) and $\lambda_x$ is a given constant for said axis under consideration (*d, q, f*), the result of the application of the two linear operators (OP1d, OP2d, OP1q, OP2q, OP1f, OP2f) having to be substantially equal to the control signal ($\tilde{V}_d,\tilde{V}_q,\tilde{V}_f$) of that axis.

2. Method according to Claim 1, wherein the regulation comprises, for each of the axes, when the current to be regulated along that axis is sufficiently close (21) to its setpoint, the application (6) of a third linear operator (OP3d, OP3q, OP3f) according to which the regulation equation comprises the addition of an addition variable ($A_x^{appliqué}$) depending on the difference between the current to be regulated along the axis in progress ($I_d, I_q, I_f$) and its setpoint $(I_d^C, I_q^C, I_f^C)$.

3. Method according to Claim 2, wherein the addition variable of the third linear operator (OP3d, OP3q, OP3f) is determined by carrying out, for a given interpolation window ($\varepsilon_x$), the interpolation between the higher addition variable ($A_x^+$) and the lower addition variable ($A_\chi^-$).

4. System for controlling a power train equipping a motor vehicle and comprising an electric motor provided with a rotor and a stator, comprising means of regulation of the currents ($I_d, I_q, I_f$) of the rotor and of the stator so that they reach required current values $(I_d^C, I_q^C, I_f^C)$ using control signals ($\tilde{V}_d,\tilde{V}_q,\tilde{V}_f$) of the electric motor, said currents to be regulated ($I_d, I_q, I_f$), and said control signals ($\tilde{V}_d,\tilde{V}_q,\tilde{V}_f$) being expressed in a rotating reference frame comprising a plurality of axes (*d, q, f*), said control signals ($\tilde{V}_d,\tilde{V}_q,\tilde{V}_f$) resulting from a transformation comprising a change of variable allowing the dynamic decoupling of the regulation along each of the axes of said plurality of axes, **characterized in that** said regulation means (MR) comprise, for each of the axes (*d, q, f*) of said plurality of axes, means of application of a first (M_OP1d, M_OP1q, M_OP1f) or of a second (M_OP2d, M_OP2q, M_OP2f) linear operator according to which the regulation equation takes the form:

$$\tilde{V}_x = A_x^- - \lambda_x L_{x_{max}} \left( I_x - I_x^c \right) \ si \ I_x \geq I_x^c,$$

or

$$\tilde{V}_x = A_x^+ - \lambda_x L_{x_{max}} \left( I_x - I_x^c \right) \ si \ I_x \leq I_x^c,$$

in which $I_x$ is the current to be regulated along the axis under consideration (*d, q, f*), $I_x^c$ is the setpoint current along said axis under consideration (*d, q, f*), $\tilde{V}_x$ is the control signal for said axis under consideration (*d, q, f*), $A_x^+$ and $A_x^-$ are addition variables for said axis under consideration (*d, q, f*), the variable $A_x^+$ being higher than the variable $A_x^-$, $L_{xmax}$ is a maximum inductance value of the motor for said axis under consideration (*d, q, f*) and $\lambda_x$ is a given constant for said axis under consideration (*d, q, f*), the result of the application of the two linear operators (M_OP1d, M_OP2d, M_OP1q, M_OP2q, M_OP1f, M_OP2f) having to be substantially equal to the control signal ($\tilde{V}_d,\tilde{V}_q,\tilde{V}_f$) of that axis.

5. System according to Claim 4, wherein, for each of the axes, the regulation means comprise:

- means of application of a third linear operator (M_OP3d, M_OP3q, M_OP3f) capable of applying a third linear operator (OP3d, OP3q, OP3f) according to which the regulation equation comprises the addition of an addition variable ($A_x^{appliqué}$) to the current along that axis ($I_d, I_q, I_f$), said addition variable depending on the difference between the current along that axis ($I_d, I_q, I_f$) and its setpoint $(I_d^C, I_q^C, I_f^C)$;

- and management means (MGd, MGq, MGf) that are configured, when the current to be regulated along that axis ($I_d, I_q, I_f$) is sufficiently close to its setpoint $(I_d^C, I_q^C, I_f^C)$, to activate the means of application of the third linear operator (M_OP3d, M_OP3q, M_OP3f).

6. System according to Claim 5, wherein the addition variable of the third linear operator ($A_x^{appliqué}$) is determined by carrying out, for a given interpolation window ($\varepsilon_x$), the interpolation between the higher addition variable ($A_x^+$) and the lower addition variable ($A_\chi^-$).

# FIG.1

# FIG.2

Temps

# FIG.3

## FIG.4

## FIG.5

Temps

## FIG.6

## RÉFÉRENCES CITÉES DANS LA DESCRIPTION

**Documents brevets cités dans la description**

- EP 1341293 A
- US 5015937 A
- EP 0702451 A
- US 2002175649 A
- JP 9131100 B